# EUROPÄISCHE PATENTSCHRIFT

(11) **EP 1 533 450 B1**
(45) Veröffentlichungstag und Bekanntmachung des Hinweises auf die Patenterteilung: **27.09.2006**
(21) Anmeldenummer: 04026882.3
(22) Anmeldetag: 12.11.2004
(51) Int. Cl.: E05B 49/00, E05B 65/20

(54) **Kraftfahrzeugschliesssystem**
A motor vehicle locking system
Système de fermeture pour un véhicule automobile

(30) Priorität: 14.11.2003 DE 10353572
(43) Veröffentlichungstag der Anmeldung: 25.05.2005
(73) Patentinhaber: Brose Schliesssysteme GmbH & Co. KG, 42369 Wuppertal (DE)
(72) Erfinder: Kachouh, Checrallah, 44227 Dortmund (DE); Hentsch, Ingmar, 42369 Wuppertal (DE); Langfermann, Michael, 42119 Wuppertal (DE); Saric, Sebastien, 78943 Vélizy-Villacoublay Cedex (FR)
(74) Vertreter: Gesthuysen, von Rohr & Eggert

(56) Entgegenhaltungen:
- EP-A- 1 048 807
- US-A- 5 929 769
- US-A1- 2002 093 418

## Beschreibung

Die vorliegende Erfindung betrifft ein Kraftfahrzeugschließsystem gemäß dem Oberbegriff des Anspruchs 1, eine Fernsteuerung für ein Kraftfahrzeugschließsystem gemäß dem Oberbegriff des Anspruchs 11 sowie ein Kraftfahrzeug gemäß dem Oberbegriff des Anspruchs 12.

Aus der Praxis ist es bekannt, mittels einer Fernsteuerung mindestens ein Kraftfahrzeugschloß, wie ein Seitentürschloß oder Kofferraumschloß, eines Kraftfahrzeugs oder dessen Zentralverriegelung zu ent- oder verriegeln. Die Fernsteuerung weist einen Energiespeicher, insbesondere in Form einer Batterie, und einen Sender auf, der bei manueller Betätigung der Fernsteuerung ein Signal, insbesondere ein HF-Signal, zur entsprechenden Steuerung des Kraftfahrzeugs aussendet.

Der grundsätzliche Vorteil der Ausstattung der Fernsteuerung mit einem Energiespeicher besteht darin, daß die Kommunikation mit dem Kraftfahrzeug über vergleichsweise große Entfernungen möglich ist. Den grundlegenden Aufbau eines derartigen Kraftfahrzeugschließsystems zeigt die DE 35 66 377 A1, von der die vorliegende Erfindung ausgeht. Hier ist die Fernsteuerung ebenfalls mit einem Energiespeicher ausgestattet. Allerdings ist zur entsprechenden Steuerung des Kraftfahrzeugs nicht die Betätigung der Fernsteuerung, sondern einer am Kraftfahrzeug angeordneten Handhabe vorgesehen. Die Betätigung der Handhabe startet dann einen Kommunikationszyklus mit der Fernsteuerung, die hier lediglich der Überprüfung der Zugangsberechtigung dient. Mit einem solchen Kraftfahrzeugschließsystem läßt sich der obige, besondere Vorteil der Fernsteuerung mit Energiespeicher natürlich nicht ausnutzen. Ferner ist es hier nachteilig, daß bei einem Ausfall des Energiespeichers die Funktion der Fernsteuerung vollständig wegfällt.

Bei einem weiteren bekannten, ebenfalls in der DE 35 66 377 A1 dargestellten Kraftfahrzeugschließsystem ist es vorgesehen, daß die Fernsteuerung die für die Kommunikation erforderliche Energie drahtlos über einen kraftfahrzeugseitigen Sender bezieht. Ein Energiespeicher ist hier nicht mehr vorgesehen.

Problematisch ist allerdings die Tatsache, daß bei einem derartigen Kraftfahrzeugschließsystem mit vertretbarem Aufwand nur kurze Funkübertragungsstrecken realisierbar sind.

Der vorliegenden Erfindung liegt die Aufgabe zugrunde, ein Kraftfahrzeugschließsystem, eine Fernsteuerung für ein Kraftfahrzeugschließsystem und ein Kraftfahrzeug mit einem derartigen Kraftfahrzeugschließsystem anzugeben, so daß mit nur geringem Aufwand ein Ent- und/oder Verriegeln eines Kraftfahrzeugschlosses auch bei entladenem Energiespeicher der Fernsteuerung möglich ist.

Die obige Aufgabe wird durch ein Kraftfahrzeugschließsystem gemäß Anspruch 1, eine Fernsteuerung gemäß Anspruch 11 oder ein Kraftfahrzeug gemäß Anspruch 12 gelöst. Vorteilhafte Weiterbildungen sind Gegenstand der Unteransprüche.

Eine grundlegende Idee der vorliegenden Erfindung liegt darin, die Fernsteuerung zusätzlich mit einem Transponder zu versehen, der durch ein kraftfahrzeugseitig erzeugbares Nahfeld mit Energie versorgbar ist, so daß bei entladenem Energiespeicher der Fernsteuerung mittels des Transponders ein Datenaustausch zur Überprüfung der Zugangsberechtigung ausführbar ist. Folglich ist ein Schlüssel zum Ent- und/oder Verriegeln - auch bei entladenem Energiespeicher in der Fernsteuerung - nicht mehr erforderlich. Insbesondere bietet die vorschlagsgemäße Lösung eine derartige Sicherheit und Redundanz, daß auf die mittels eines Schlüssels betätigbare Mechanik zum Ent- und Verriegeln des zugeordneten Kraftfahrzeugtürschlosses ganz verzichtet werden kann, so daß dementsprechend ein einfacherer und kostengünstigerer Aufbau des vorschlagsgemäßen Kraftfahrzeugschließsystems ermöglicht wird.

Ganz besonders vorteilhaft ist die vorschlagsgemäße Lösung dadurch, daß der Nahfeldsender lediglich auf das Nahfeld ausgelegt werden muß, was im Ergebnis zu einer besonders kostengünstigen Realisierung führt. Erreicht wird dieser Vorteil durch die zusätzliche Ausstattung der Fernsteuerung mit einem Transponder, der in erster Linie bei entladenem Energiespeicher zur Überprüfung der Zugangsberechtigung herangezogen wird.

Gemäß einer besonders bevorzugten Variante ist der Transponder der Fernsteuerung gleichzeitig zum Öffnen einer Wegfahrsperre und/oder zum Freigeben der Zündung bzw. Starten des Kraftfahrzeugs verwendbar. Dies gestattet einen besonders einfachen und damit kostengünstigen Aufbau, da ein separater Zündschlüssel nicht erforderlich ist.

Weitere Vorteile, Merkmale, Eigenschaften und Aspekte der vorliegenden Erfindung ergeben sich aus der folgenden Beschreibung bevorzugter Ausführungsformen anhand der Zeichnung. Es zeigt:
- Fig. 1: eine schematische, perspektivische Darstellung eines Kraftfahrzeugs mit einem vorschlagsgemäßen Kraftfahrzeugschließsystem;
- Fig. 2: eine schematische Darstellung des Kraftfahrzeugschließsystems mit einer Fernsteuerung und einem Außengriff einer Kraftfahrzeugtür gemäß einer ersten Ausführungsform;
- Fig. 3: eine schematische Darstellung eines Außengriffs gemäß einer zweiten Ausführungsform;
- Fig. 4: eine schematische, perspektivische Darstellung des Türaußengriffs gemäß Fig. 3 mit einwirkender Fernsteuerung;
- Fig. 5: eine schematische Darstellung eines Außengriffs gemäß einer dritten Ausführungsform;
- Fig. 6: eine schematische, ausschnittsweise Schnittansicht des Außengriffs gemäß Fig. 5 mit eingreifender Fernsteuerung; und
- Fig. 7: eine schematische Darstellung eines Außengriffs gemäß einer vierten Ausführungsform.

In den Figuren werden für gleiche oder ähnliche Teile die selben Bezugszeichen verwendet, wobei entsprechende oder vergleichbare Eigenschaften und Vorteile erreicht werden, auch wenn eine wiederholte Beschreibung weggelassen ist.

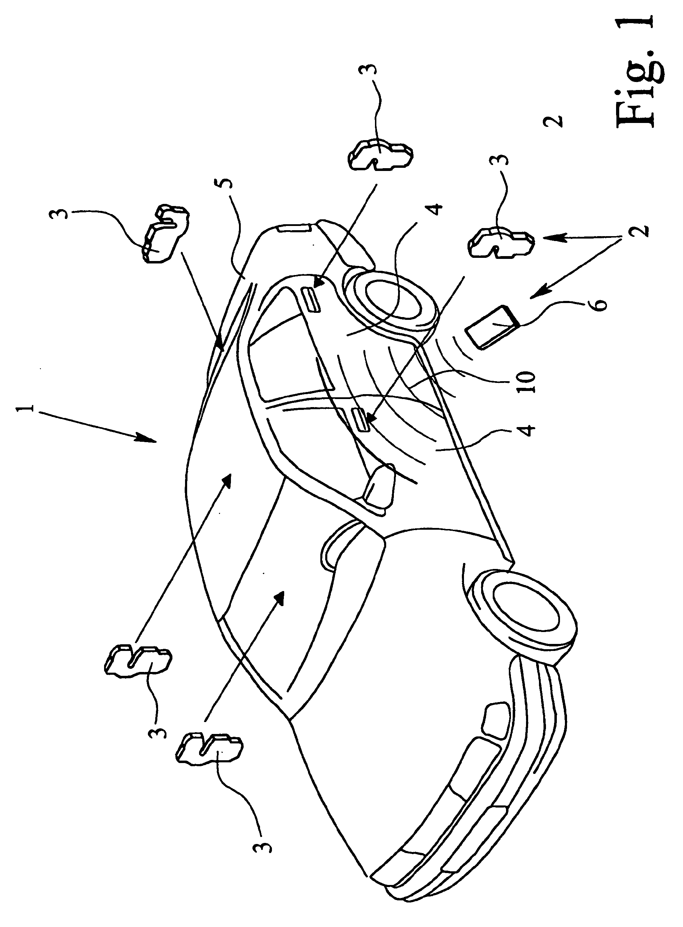

In Fig. 1 ist schematisch ein Kraftfahrzeug 1 mit einem Kraftfahrzeugschließsystem 2 dargestellt. Das Kraftfahrzeugschließsystem 2 weist insbesondere mehrere Kraftfahrzeugschlösser 3, insbesondere für Kraftfahrzeugseitentüren 4 oder eine Kraftfahrzeugheckklappe 5, eine Motorhaube oder dergleichen auf. Die Einbaupositionen der Kraftfahrzeugschlösser 3 sind durch Pfeile in Fig. 1 angedeutet.

Unter dem Begriff "Kraftfahrzeugschloß" ist primär ein Türschloß zu verstehen. Jedoch kann es sich hierbei auch um ein Kofferraumschloß, ein Haubenschloß, ein Klappenschloß oder dergleichen eines Kraftfahrzeugs handeln.

Jedes Kraftfahrzeugschloß 3 ist vorzugsweise - zumindest von außen - ausschließlich motorisch, insbesondere elektromotorisch, ent- und/oder verriegelbar, insbesondere mittels einer bekannten Zentralverriegelung oder eines Zentralverriegelungsantriebs. Bei einer Ausführung als Elektroschloß, was insbesondere bei den Kraftfahrzeugschlössern 3 der Kraftfahrzeugseitentüren 4 vorgesehen ist, kann jedes Kraftfahrzeug zusätzlich noch die Möglichkeit einer motorischen Öffnung, also des Aushebens einer nicht dargestellten Sperrklinke, mittels eins nicht dargestellten Öffnungsantriebs aufweisen. Das Entriegeln und Verriegeln kann dementsprechend auch nur schaltungstechnisch erfolgen. Jedoch können die Kraftfahrzeugschlösser 3 auch in sonstiger Weise motorisch angetrieben oder beispielsweise pneumatisch betätigbar, insbesondere ent- und/oder verriegelbar sein.

Das Kraftfahrzeugtürschließsystem 2 weist weiter eine Fernsteuerung 6 zum Ent- und Verriegeln einzelner Kraftfahrzeugschlösser 3 oder gegebenenfalls aller Kraftfahrzeugschlösser 3 mittels einer nicht dargestellten Zentralverriegelung oder dergleichen auf. Insbesondere ist eine manuelle Betätigung der Fernsteuerung 6 erforderlich, um das Ent- bzw. Verriegeln des Kraftfahrzeugschlosses 3 bzw. der Kraftfahrzeugschlösser 3 zu bewirken.

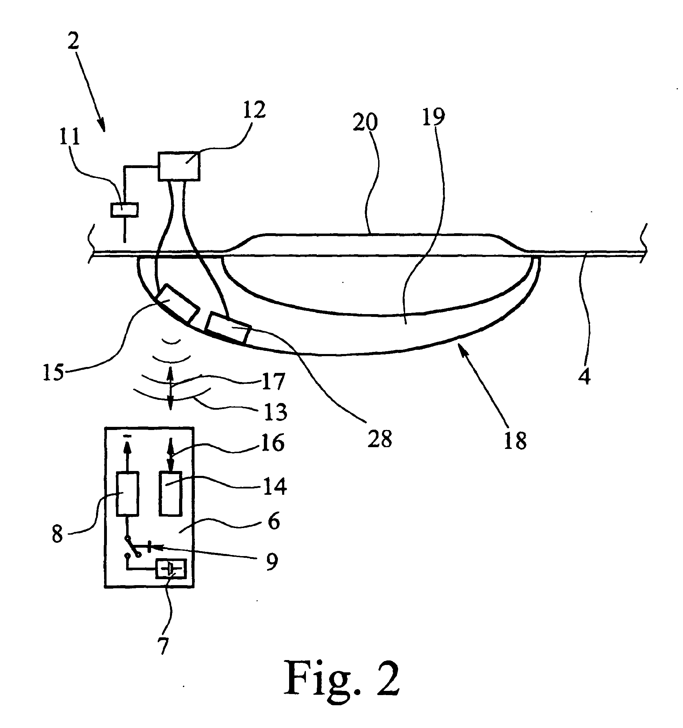

Fig. 2 zeigt in einer schematischen Darstellung das Kraftfahrzeugschließsystem 2, insbesondere einen vorschlagsgemäßen Aufbau der Fernsteuerung 6.

Die Fernsteuerung 6 weist einen Energiespeicher 7, insbesondere eine Batterie oder einen Akkumulator, und einen Sender 8 sowie vorzugsweise ein Betätigungselement 9 auf. Bei Betätigung des Betätigungselements 9 ist der Sender 8 bzw. eine sonstige Elektronik der Fernsteuerung 6 mit Energie vom Energiespeicher 7 versorgbar, so daß von der Fernsteuerung 6 ein Signal 10 zum Ent- und/oder Verriegeln eines Kraftfahrzeugschlosses 3 oder mehrerer Kraftfahrzeugschlösser 3, gegebenenfalls über eine nicht dargestellte Zentralverriegelung oder dergleichen, aussendbar ist, wie in Fig. 1 angedeutet. Insbesondere handelt es sich hierbei um ein HF-Signal, jedoch kann es sich auch um ein Infrarotsignal oder ein sonstiges geeignetes Signal 10 handeln.

Fig. 2 zeigt, daß das Kraftfahrzeugschließsystem 2 kraftfahrzeugseitig einen Empfänger 11 zum Empfang des in Fig. 2 aus Vereinfachungsgründen nicht dargestellten Signals 10 aufweist, der an eine gegebenenfalls zentrale oder dezentrale Steuereinrichtung 12, die gegebenenfalls eine Zentralverriegelung darstellen oder ansteuern kann, zur Weiterverarbeitung des Ent- bzw. Verriegelungssignals 10 angeschlossen ist.

Wenn der Energiespeicher 7 entladen ist, kann das zum Ent- bzw. Verriegeln erforderliche Signal 10 nicht mehr erzeugt werden. Bis zum Aufladen oder Austauschen des Energiespeichers 7 war bisher die Fernsteuerung 6 damit funktionslos.

Vorschlagsgemäß ist vorgesehen, daß die Fernsteuerung 6 zusätzlich einen durch ein Nahfeld 13 mit Energie versorgbaren Transponder 14 aufweist, wie in Fig. 2 angedeutet. Insbesondere handelt es sich hierbei um einen Transponder 14 im eigentlichen Sinne, d.h. der Transponder 14 ist ausschließlich durch das Nahfeld 13 mit Energie versorgbar. Entsprechend weist das Kraftfahrzeugschließsystem 2 einen fahrzeugseitigen Nahfeldsender 15 zur Erzeugung des Nahfelds 13 auf.

Bei dem Nahfeld 13 handelt es sich insbesondere um ein NF-Feld. Im Gegensatz zur Hochfrequenz (HF), die im Megahertz-Bereich liegt, liegt die Niederfrequenz (NF) im Bereich von einigen Kilohertz. Besonders bevorzugt ist ein NF-Bereich von 50 bis 250 KHz, insbesondere etwa 125 KHz. Das von dem Sender 8 der Fernsteuerung 6 erzeugbare Signal 10 liegt vorzugsweise hingegen im HF-Bereich von mehreren hundert MHz, insbesondere etwa 400 bis 700 MHz, ggf. bis etwa 900 MHz. Besonders zweckmäßig ist auch der Bluetooth-Standard mit ca. 2,4 GHz als Arbeitsfrequenz.

Unter dem Nahfeld 13 ist generell eine Reichweite von bis ca. 1,0 m zu verstehen, wobei aber im engeren Sinne insbesondere nur eine Reichweite von wenigen Zentimetern zu verstehen ist.

Der Transponder 14 oder eine sonstige zugeordnete, nicht dargestellte Elektronik der Fernsteuerung 6 enthält Zugangsberechtigungsdaten. Bei Empfang des Nahfelds 13 mittels einer geeigneten Antenne 16, hier einer NF-Antenne, wird der Transponder 14 mit Energie versorgt und gibt kodierte Signale mit den Zugangsberechtigungsdaten an einen fahrzeugseitigen, nicht dargestellten Empfänger des Kraftfahrzeugsystems 2 aus. Insbesondere erfolgt die Ausgabe bzw. das Aussenden vom Transponder 14 über die Antenne 16, so daß diese sowohl zum Empfang als auch zum Senden genutzt wird. Jedoch kann auch eine separate, nicht dargestellte Antenne vorgesehen sein.

Entsprechend dient vorzugsweise der Nahfeldsender 15 auch dem Empfang der vom Transponder 14 ausgesendeten Daten. Jedoch kann hierfür auch ein separater, nicht dargestellter Empfänger kraftfahrzeugseitig vorgesehen sein.

Beim Darstellungsbeispiel ist der Nahfeldsender 15 ebenfalls an die Steuereinrichtung 12 angeschlossen. Diese kann dann bei Empfang von Daten des Transponders 14 die Zugangsberechtigung überprüfen und bei vorliegender Zugangsberechtigung ein anschließendes Ent- bzw. Verriegeln eines Kraftfahrzeugschlosses 3 oder aller Kraftfahrzeugschlösser 3 gestatten oder unmittelbar veranlassen.

Der Datenaustausch 17 bzw. Austausch der Zugangsberechtigung erfolgt insbesondere ebenfalls im NF-Bereich. Insbesondere erfolgt durch den Transponder 14 lediglich eine Modulation des Nahfelds 13 derart, daß der Datenaustausch 17 bzw. die Überprüfung der Zugangsberechtigung ermöglicht wird. Jedoch kann der Transponder 14 bedarfsweise auch über ein sonstiges Signal, insbesondere in einem anderen Frequenzbereich oder beispielsweise auch über Licht, Zugangsberechtigungsdaten an die Steuereinrichtung 12 übermitteln.

Der Datenaustausch 17 bzw. die Übermittlung der Zugangsberechtigungsdaten erfolgt vorzugsweise, wie sich bereits aus der geringen Reichweite des Nahfelds 13 ergibt, nur über eine kurze Distanz, insbesondere von wenigen Zentimetern. Grundsätzlich genügt es hierzu, die Fernsteuerung 6 in die Nähe des Nahfeldsenders 13 bei eingeschaltetem Nahfeld 15 zu bewegen. Nachfolgend wird auf verschiedene Varianten eingegangen, die eine fahrzeugseitige Transponderabfrage und bei Vorliegen der Zugangsberechtigung gegebenenfalls ein anschließendes Ent- bzw. Verriegeln eines Kraftfahrzeugschlosses 3 bzw. mehrerer oder aller Kraftfahrzeugschlösser 3 ermöglichen.

Der Nahfeldsender 15 ist vorzugsweise an oder in einem Außengriff 18 einer Kraftfahrzeugseitentür 4, insbesondere der Fahrertür, oder einem benachbartem Bereich untergebracht. Insbesondere ist der Nahfeldsender 15 in eine, gegebenenfalls auch bewegbare Handhabe 19 oder eine Griffschale 20 des Türaußengriffs 18 integriert oder daran angebracht.

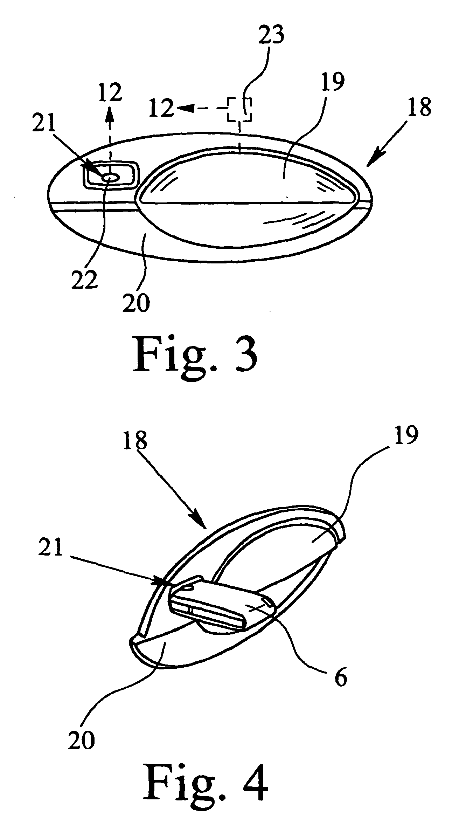

Das Kraftfahrzeugschließsystem 2 weist vorzugsweise eine Einrichtung 21 zur Erfassung einer Annäherung, Berührung und/oder Betätigung durch die Fernsteuerung 6 auf, wie in Fig. 3 angedeutet. Insbesondere ist die Einrichtung 21 am Außengriff 18 und/oder in unmittelbarer Nähe zum Nahfeldsender 15 angeordnet.

Bei der in Fig. 3 dargestellten, zweiten Ausführungsform weist die Einrichtung 21 einen Mikroschalter 22 auf und ist in einen feststehenden Teil des Außengriffs 18, insbesondere in die Griffschale 20 neben der hier nach oben klappbaren Handhabe 19 angeordnet. Der Nahfeldsender 15 ist insbesondere in unmittelbarer Nähe der Einrichtung 21 angeordnet bzw. in diese integriert, in Fig. 3 jedoch nicht dargestellt.

Der Handhabe 19 ist vorzugsweise ein Mikroschalter 23 oder dergleichen zur Detektion einer Betätigung der Handhabe 19, insbesondere wenn die Handhabe 19 zum Öffnen des Kraftfahrzeugschlosses 3 der zugeordneten Kraftfahrzeugtür 4 nach oben geschwenkt wird, zugeordnet. Die Einrichtung 21 bzw. deren Mikroschalter 22 und der Mikroschalter 23 sind vorzugsweise an die Steuereinrichtung 12 oder eine sonstige Kraftfahrzeugelektronik des Kraftfahrzeugschließsystems 2 angeschlossen.

Fig. 4 zeigt in einer schematischen, perspektivischen Darstellung, wie die Fernsteuerung 6 mit der Einrichtung 21 in Kontakt bringbar ist. Insbesondere sind der Türaußengriff 18 bzw. die Einrichtung 21 und die Fernsteuerung 6 so aufeinander abgestimmt, daß mittels der Fernsteuerung 6 der Mikroschalter 22 betätigbar ist.

Bei Betätigung des Mikroschalters 22 wird der Nahfeldsender 15, insbesondere für eine vorbestimmte Zeitdauer und/oder bis zum Abschluß des Datenaustauschs 17, aktiviert. Da sich bei Betätigung des Mikroschalters 22 die Fernsteuerung 6 in unmittelbarer Nähe des Nahfeldsenders 15 befindet, kann problemlos der Datenaustausch 17 und damit die Überprüfung der Zugangsberechtigung, also die Transponderabfrage erfolgen.

Wenn die Zugangsberechtigung vorliegt, kann dann unmittelbar ein Entriegeln des zugeordneten Kraftfahrzeugschlosses 3 oder aller Kraftfahrzeugschlösser 3 erfolgen. Alternativ kann das Entriegeln auch erst bei Detektion einer Betätigung der Handhabe 19 - hier mittels des Mikroschalter 23 - erfolgen.

Ein Verriegeln kann beispielsweise dadurch erfolgen, daß nach dem Schließen der zugeordneten Kraftfahrzeugtür der Mikroschalter 22 mittels der Fernsteuerung 6 in der in Fig. 4 dargestellten Weise betätigt wird.

Alternativ kann ein Verriegeln auch durch lediglich unmittelbar manuelle Betätigung des Mikroschalters 22, also ohne Verwendung der Fernsteuerung 6 ausgelöst werden.

Zusätzlich oder alternativ zum Mikroschalter 22 kann die Vorrichtung 21 selbstverständlich auch sonstige geeignete Taster, Schalter, beispielsweise Näherungsschalter, Sensoren, beispielsweise Piezoelemente, oder dergleichen zur Erfassung einer Annäherung, Berührung und/oder Betätigung durch die Fernsteuerung 6 aufweisen.

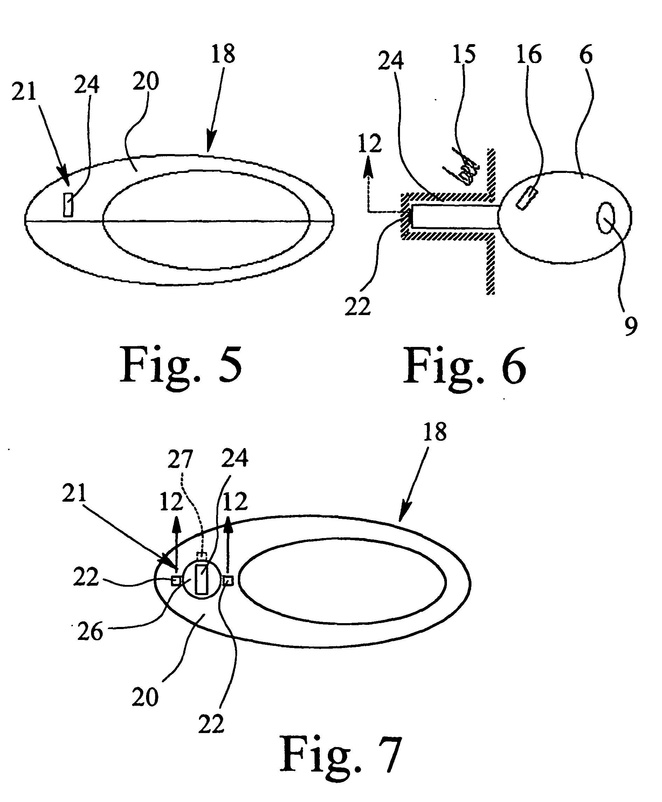

Bei einer in Fig. 5 dargestellten, dritten Ausführungsform weist die Einrichtung 21 eine Aussparung 24 zur zumindest teilweisen Aufnahme der Fernsteuerung 6 auf. Die schematische Schnittdarstellung gemäß Fig. 6 zeigt, daß vorzugsweise im Bereich des Bodens der Mikroschalter 22 angeordnet und mittels eines in die Aussparung 24 einführbaren Vorsprungs 25 der Fernsteuerung 6 betätigbar ist. Die Aussparung 24 erleichtert, insbesondere in Kombination mit dem Vorsprung 25 an der Fernsteuerung 6, eine intuitive, vorzugsweise schlüsselartige Bedienung.

Bei eingeführter Fernsteuerung 6 bzw. eingeführtem Vorsprung 25 sind der Nahfeldsender 15 und die Antenne 16, wie in Fig. 6 angedeutet, sehr nah beieinander, so daß wiederum ein optimaler Datenaustausch 17 ermöglicht wird.

Die Funktion der dritten Ausführungsform erfolgt vorzugsweise entsprechend der zweiten Ausführungsform.

Fig. 7 zeigt eine vierte Ausführungsform. Hier ist die Aussparung 24 in einer verdrehbaren Nuß 26 oder dergleichen angeordnet. Vorzugsweise besteht die Nuß 26 aus Kunststoff. Der Nuß 26 sind zwei Mikroschalter 22 zugeordnet, die bei entsprechendem Verdrehen der Nuß 26, insbesondere mittels einer radialen Nase 27, betätigbar sind.

Bei der vierten Ausführungsform ist die Fernsteuerung 6 vorzugsweise wiederum wie in Fig. 6 angedeutet ausgebildet, also mit einem Vorsprung 25 in die Aussparung 24 einführbar. Durch Drehen der Fernsteuerung 6 ist die Nuß 26 drehbar und je nach Drehrichtung hier der rechte oder linke Mikroschalter 22 betätigbar. Bei Betätigung eines Mikroschalters 22 erfolgt wiederum eine Transponderabfrage mittels des in unmittelbarer Nähe zur Einrichtung 21 angeordneten, nicht dargestellten Nahfeldsensors 15 und vorzugsweise auch - abhängig vom betätigten Mikroschalter 22 - ein Ent- oder Verriegeln des zugeordneten Kraftfahrzeugschlosses 3 oder aller Kraftfahrzeugschlösser 3.

Die vierte Ausführungsfbrm ermöglicht eine besonderes einfache, hochgradig intuitive Bedienung.

Gemäß einer nicht dargestellten Ausführungsvariante, kann die Aussparung 24 auch im wesentlichen schlitzförmig ausgebildet sein. In diesem Fall ist die Fernbedienung 6 beispielsweise scheckkartenartig ausgebildet, um zumindest teilweise in die Aussparung 24 einschiebbar zu sein.

Alternativ oder zusätzlich zum Nahfeldsender 25 bzw. Nahfeld 13 kann zur Energieübertragung auf die Fernsteuerung 6 bzw. den Transponder 14 auch eine induktive Kopplung, insbesondere bei der Variante mit einer Aussparung 24 zur zumindest teilweisen Aufnahme der Fernsteuerung 6 vorgesehen sein. Alternativ oder zusätzlich kann auch eine Energieübertragung durch entsprechende Kontakte bei eingeführter bzw. anliegender Fernsteuerung 6 vorgesehen sein.

Entsprechend kann der Datenaustausch 17 bzw. die Übermittlung der Zugangsberechtigungsdaten vom Transponder 14 oder einem sonstigen elektronischen Teil der Fernsteuerung 6 alternativ oder zusätzlich auch induktiv und/oder durch elektrische Kontakte erfolgen.

Bei der ersten, in Fig. 2 dargestellten Ausführungsform ist dem Außengriff 18 zusätzlich oder alternativ zu der Einrichtung 21 ein manuell betätigbares Bedienelement 28 zugeordnet. Hierbei kann es sich bei beweglicher Ausbildung um die Handhabe 19, jedoch auch um einen Taster, Sensor oder dergleichen handeln, um eine Bestätigung, Annäherung und/oder Berührung, insbesondere einer nicht dargestellten Hand einer Bedienperson als Betätigung zu detektieren. Insbesondere ist beispielsweise ein Wechseltaster vorgesehen, um einerseits ein Entriegeln und andererseits ein Verriegeln des zugeordneten Kraftfahrzeugschlosses 3 oder aller Kraftfahrzeugschlösser 3 zu bewirken. Vorzugsweise wird bei Betätigung des Bedienelements 28 der Nahfeldsender 15 und damit das Nahfeld 13 aktiviert, vorzugsweise für eine bestimmte Zeitdauer und/oder bis zum Abschluß des Datenaustauschs 17. Dementsprechend erfolgt dann eine Transponderabfrage zur Überprüfung der Zugangsberechtigung. Hierbei muß sich die Fernbedienung 6 selbstverständlich im Bereich des Nahfelds 13 befmden. Bei vorliegender Zugangsberechtigung erfolgt dann das Ent- bzw. Verriegeln.

Gemäß einer Ausführungsvariante kann das Kraftfahrzeugschließsystem 2 auch mit einer "Passive Entry"-Funktion ausgestattet sein. Unter "Passive Entry"-Funktion ist insbesondere eine automatische, kraftfahrzeugseitige Datenabfrage bzw. Identifikation der Fernsteuerung 6 zu verstehen, um festzustellen, ob eine sich dem Kraftfahrzeug 1 mit der Fernsteuerung 6 nähernde Person berechtigt ist, das Kraftfahrzeug 1 bzw. eine Kraftfahrzeugtür 4 zu öffnen.

Bei entsprechender Berechtigung der Person erfolgt üblicherweise ein automatisches Entriegeln entweder einer Zentralverriegelung, des Kraftfahrzeugschlosses 3 der Fahrertür 4 oder zumindest des Kraftfahrzeugschlosses 3, dem sich die Person nähert. Der Energie- bzw. Strombedarf der "Passive Entry"-Funktion und der damit verbundenen Abfrage der Zugangsberechtigung ist beträchtlich, insbesondere wenn die "Passive Entry"-Funktion auf eine verhältnismäßig große Entfernung von zumindest einigen Metern zum Kraftfahrzeug 1 hin ausgeführt werden soll. Dementsprechend ist für eine benutzerfreundliche Funktion der "Passive Entry"-Funktion ebenfalls der Energiespeicher 7 erforderlich. Und bei entladenem Energiespeicher 7 ergibt sich das gleiche Problem, wie bei manuell betätigbarer Fernsteuerung 6. Dementsprechend weist auch bei dieser Ausführungsvariante die Fernsteuerung 6 zusätzlich den Transponder 14 auf.

Vorzugsweise weist das Kraftfahrzeug 1 eine nicht dargestellte Wegfahrsperre auf, die mittels des Transponders 14 in der Fernsteuerung 6 öffenbar bzw. deaktivierbar ist. Insbesondere dient die Fernsteuerung 6 alternativ oder gleichzeitig als "elektronischer Zündschlüssel" für das Kraftfahrzeug 1. Mittels der Fernsteuerung 6 ist dann das Starten des Kraftfahrzeugs 1 unmittelbar auslösbar oder zumindest freigebbar und insbesondere auch die Wegfahrsperre deaktivierbar. So erübrigt sich ein zusätzlicher Zündschlüssel.

Bedarfsweise weist das Kraftfahrzeug 1 eine nicht dargestellte Einrichtung zum Ausladen des Energiespeichers 8 der Fernsteuerung 6 auf.

Es ist darauf hinzuweisen, daß die einzelnen Aspekte und konstruktiven Lösungen bzw. Alternativen der voranstehend erläuterten Ausführungsformen auch beliebig miteinander kombiniert werden können.

## Patentansprüche

1. Kraftfahrzeugschließsystem (2) mit mindestens einem Kraftfahrzeugschloß (3) und einer tragbaren Fernsteuerung (6), die einen Energiespeicher (7), einen vom Energiespeicher (7) versorgbaren Sender (8) und vorzugsweise ein Betätigungselement (9) aufweist, so daß insbesondere bei Betätigung des Betätigungselements (9) ein Signal (10) zum Ent- und/oder Verriegeln des Kraftfahrzeugschlosses (3) aussendbar ist,
**dadurch gekennzeichnet,**
**daß** die Fernsteuerung (6) zusätzlich einen durch ein Nahfeld (13) mit Energie versorgbaren Transponder (14) und das Kraftfahrzeugschließsystem (2) einen fahrzeugseitigen Nahfeldsender (15) zur Erzeugung des Nahfelds (13) aufweist, so daß bei entladenem Energiespeicher (7) mittels des Transponders (14) zwischen der Fernsteuerung (6) und dem Kraftfahrzeugschließsystem (2) ein Datenaustausch (17) zur Überprüfung der Zugangsberechtigung ausführbar ist.

2. Kraftfahrzeugschließsystem nach Anspruch 1, **dadurch gekennzeichnet, daß** das vom Sender (8) der Fernsteuerung (6) ausgebbare Signal (10) zum Ent- und/oder Verriegeln des Kraftfahrzeugschlosses (3) ein Funksignal, insbesondere ein HF-Signal, oder ein Infrarotsignal ist.

3. Kraftfahrzeugschließsystem nach Anspruch 1 oder 2, **dadurch gekennzeichnet, daß** der Transponder (14) ausschließlich durch das Nahfeld (13) mit Energie versorgbar ist und/oder die Zugangsberechtigungsdaten enthält.

4. Kraftfahrzeugschließsystem nach einem der voranstehenden Ansprüche, **dadurch gekennzeichnet, daß** das Nahfeld (13) ein NF-Feld ist.

5. Kraftfahrzeugschließsystem nach einem der voranstehenden Ansprüche, **dadurch gekennzeichnet, daß** der Datenaustausch (17) drahtlos, vorzugsweise im NF-Bereich, ausführbar ist.

6. Kraftfahrzeugschließsystem nach einem der voranstehenden Ansprüche, **dadurch gekennzeichnet, daß** die Fernsteuerung (6) eine NF-Antenne (16) zum Empfang und/oder Senden aufweist.

7. Kraftfahrzeugschließsystem nach einem der voranstehenden Ansprüche, **dadurch gekennzeichnet, daß** das Kraftfahrzeugschließsystem (2) eine Kraftfahrzeugtür (4) oder -klappe (5) insbesondere mit einem zugeordneten Außengriff (18) aufweist, der das Kraftfahrzeugschloß (3) zugeordnet ist, vorzugsweise, daß der Nahfeldsender (15) dem Außengriff (18) zugeordnet ist, insbesondere an oder in diesem oder benachbart zu diesem angeordnet ist.

8. Kraftfahrzeugschließsystem nach Anspruch 7, **dadurch gekennzeichnet, daß** dem Außengriff (18) oder dem Kraftfahrzeugschloß (3) eine Einrichtung (21), wie ein Mikroschalter (22), Taster oder Sensor, zur Erfassung einer Annäherung, Berührung und/oder Betätigung durch die Fernsteuerung (6) zugeordnet ist, vorzugsweise, daß die Einrichtung (21) eine Aussparung (24) zur zumindest teilweisen Aufnahme der Fernsteuerung (6) aufweist, und/oder, weiter vorzugsweise, daß die Einrichtung (21) eine von der Fernsteuerung (6) verdrehbare Nuß (26) und vorzugsweise mindestens einen zugeordneten Mikroschalter (22) aufweist.

9. Kraftfahrzeugschließsystem nach Anspruch 8, **dadurch gekennzeichnet, daß** bei Erfassung einer Annäherung, Berührung und/oder Betätigung der Nahfeldsender (15), vorzugsweise für eine vorbestimmte Zeitdauer und/oder bis zum Abschluß des Datenaustauschs (17), aktivierbar ist, insbesondere wobei das Kraftfahrzeugschloß (3) nur dann ent- oder verriegelbar ist, wenn die Zugangsberechtigung durch Datenaustausch (17) mit dem Transponder (14) festgestellt wird oder wurde.

10. Kraftfahrzeugschließsystem nach einem der voranstehenden Ansprüche, **dadurch gekennzeichnet, daß** einem Außengriff (18) oder dem Kraftfahrzeugschloß (3) ein von außen manuell betätigbares Bedienelement (28), wie eine Handhabe (19), ein Taster oder ein Sensor, zum Entriegeln und/oder Verriegeln des Kraftfahrzeugschlosses (3) zugeordnet ist, vorzugsweise, daß bei Betätigung des Bedienelements (28) der Nahfeldsender (15), vorzugsweise für eine vorbestimmte Zeitdauer und/oder bis zum Abschluß des Datenaustauschs (17), aktivierbar ist, und/oder weiter vorzugsweise, daß das Kraftfahrzeugschloß (3) bei Betätigung des Bedienelements (28) nur dann ent- oder verriegelbar ist, wenn die Zugangsberechtigung durch Datenaustausch (17) mit dem Transponder (14) festgestellt wird oder wurde.

11. Fernsteuerung (6) für ein insbesondere gemäß einem der Ansprüche 1 bis 10 ausgebildetes Kraftfahrzeugschließsystem (2), wobei die Fernsteuerung (6) einen Energiespeicher (7), einen vom Energiespeicher (7) versorgbaren Sender (8) und ein Betätigungselement (9) aufweist, so daß bei Betätigung des Betätigungselements (9) ein Signal (10) zum Ent- und/oder Verriegeln eines Kraftfahrzeugschlosses (3) des Kraftfahrzeugschließsystems (2) aussendbar ist,
**dadurch gekennzeichnet,**
**daß** die Fernsteuerung (6) zusätzlich einen durch ein Nahfeld (13) mit Energie versorgbaren Transponder (14) aufweist, so daß bei entladenem Energiespeicher (7) im Nahfeld (13) mittels des Transponders (14) ein Datenaustausch (17) zur Überprüfung der Zugangsberechtigung ausführbar ist, vorzugsweise, daß die Fernsteuerung (6) die Merkmale eines oder mehrerer der Ansprüche 2 bis 6 aufweist.

12. Kraftfahrzeug (1) mit einem Kraftfahrzeugschließsystem (2),
**dadurch gekennzeichnet,**
**daß** das Kraftfahrzeugschließsystem (2) gemäß einem der Ansprüche 1 bis 10 ausgebildet ist.

13. Kraftfahrzeug nach Anspruch 12, **dadurch gekennzeichnet, daß** das Kraftfahrzeug (1) eine Wegfahrsperre aufweist, die mittels der Fernsteuerung (6) bzw. dessen Transponder (14) deaktivierbar ist, und/oder, vorzugsweise, daß das Kraftfahrzeug (1) derart ausgebildet ist, daß das Starten des Kraftfahrzeugs (1) mittels der Fernsteuerung (6) bzw. dessen Transponder (14) freigebbar ist.

14. Kraftfahrzeug nach Anspruch 12 oder 13, **dadurch gekennzeichnet, daß** das Kraftfahrzeug (1) eine Einrichtung zum Aufladen des Energiespeichers (7) der Fernsteuerung (6) aufweist.

## Claims

1. Motor-vehicle locking system (2) having at least one motor-vehicle lock (3) and a portable remote control means (6) which has an energy store (7), a transmitter (8) which can be supplied with power by the energy store (7), and preferably an operating element (9), so that a signal (10) for unlocking and/or locking the motor-vehicle lock (3) can be output, particularly when the operating element (9) is operated,
**characterized**
**in that** the remote control means (6) additionally has a transponder (14) which can be supplied with power by means of a near field (13), and the motor-vehicle locking system (2) has a near-field transmitter (15) for generating the near field (13) at the motor-vehicle end, so that data can be interchanged (17) between the remote control means (6) and the motor-vehicle locking system (2) for the purpose of checking access authorization by means of the transponder (14) when the energy store (7) is discharged.

2. Motor-vehicle locking system according to Claim 1, **characterized in that** the signal (10) for unlocking and/or locking the motor-vehicle lock (3) which can be output by the transmitter (8) of the remote control means (6) is a radio signal, in particular an RF signal, or an infrared signal.

3. Motor-vehicle locking system according to Claim 1 or 2, **characterized in that** the transponder (14) can be supplied with power only by means of the near field (13) and/or contains the access authorization data.

4. Motor-vehicle locking system according to one of the preceding claims, **characterized in that** the near field (13) is an AF field.

5. Motor-vehicle locking system according to one of the preceding claims, **characterized in that** data can be interchanged (17) in a wire-free fashion, preferably in the AF range.

6. Motor-vehicle locking system according to one of the preceding claims, **characterized in that** the remote control means (6) has an AF antenna (16) for reception and/or transmission purposes.

7. Motor-vehicle locking system according to one of the preceding claims, **characterized in that** the motor-vehicle locking system (2) has a motor-vehicle door (4) or flap (5), particularly with an associated external handle (18) with which the motor-vehicle lock (3) is associated, preferably **in that** the near-field transmitter (15) is associated with the external handle (18), in particular is arranged on or in the latter or adjacent to the latter.

8. Motor-vehicle locking system according to Claim 7, **characterized in that** a device (21), such as a microswitch (22), momentary contact switch or sensor, for detecting proximity, contact and/or operation by the remote control means (6), is associated with the external handle (18) or the motor-vehicle lock (3), preferably **in that** the device (21) has a cutout (24) for at least partially receiving the remote control means (6), and/or further preferably that the device (21) has a nut (26), which can be turned by the remote control means (6), and preferably at least one associated microswitch (22).

9. Motor-vehicle locking system according to Claim 8, **characterized in that** the near-field transmitter (15) can be activated, preferably for a predetermined period of time and/or until data interchange (17) is concluded, when proximity, contact and/or operation are/is detected, it particularly being possible to unlock or lock the motor-vehicle lock (3) only if access authorization is or has been established by interchanging (17) data with the transponder (14).

10. Motor-vehicle locking system according to one of the preceding claims, **characterized in that** an operator control element (28) which can be manually operated from the outside, such as a handle element (19), a momentary contact switch or a sensor, for unlocking and/or locking the motor-vehicle lock (3), is associated with an external handle (18) or the motor-vehicle lock (3), preferably **in that** the near-field transmitter (15) can be activated, preferably for a predetermined period of time and/or until data interchange (17) is concluded, when the operator control element (28) is operated, and/or further preferably **in that** the motor-vehicle lock (3) can be unlocked or locked when the operator control element (28) is operated only if access authorization is or has been established by interchanging data (17) with the transponder (14).

11. Remote control means (6) for a motor-vehicle locking system (2), in particular a motor-vehicle locking system (2) which is designed according to one of Claims 1 to 10, with the remote control means (6) having an energy store (7), a transmitter (8) which can be supplied with power by the energy store (7), and an operating element (9), so that a signal (10) for unlocking and/or locking a motor-vehicle lock (3) of the motor-vehicle locking system (2) can be output, when the operating element (9) is operated,
**characterized**
**in that** the remote control means (6) additionally has a transponder (14) which can be supplied with power by means of a near field (13), so that data can be interchanged (17) in the near field (13) for the purpose of checking access authorization by means of the transponder (14) when the energy store (7) is discharged, preferably in that the remote control means (6) has the features of one or more of Claims 2 to 6.

12. Motor vehicle (1) having a motor-vehicle locking system (2),
**characterized**
**in that** the motor-vehicle locking system (2) is designed according to one of Claims 1 to 10.

13. Motor vehicle according to Claim 12, **characterized in that** the motor vehicle (1) has an immobilizer which can be deactivated by the remote control means (6) or its transponder (14), and/or preferably **in that** the motor vehicle (1) is designed in such a way that the starting process of the motor vehicle (1) can be enabled by the remote control means (6) or its transponder (14).

14. Motor vehicle according to Claim 12 or 13, **characterized in that** the motor vehicle (1) has a device for charging the energy store (7) of the remote control means (6).

## Revendications

1. Système de fermeture pour véhicule automobile (2) comprenant au moins une serrure pour véhicule automobile (3) et une télécommande portable (6) qui présente un accumulateur d'énergie (7), un émetteur (8) pouvant être alimenté par l'accumulateur d'énergie (7) et de préférence un élément d'actionnement (9) de sorte qu'un signal (10) de déverrouillage et/ou de verrouillage de la serrure pour véhicule automobile (3) puisse être émis, notamment lors de l'actionnement de l'élément d'actionnement (9), **caractérisé en ce que** la télécommande (6) présente en plus un transpondeur (14) pouvant être alimenté en énergie par un champ proche (13) et le système de fermeture pour véhicule automobile (2) présente un émetteur de champ proche (15) côté véhicule destiné à générer le champ proche (13) de sorte que lorsque l'accumulateur d'énergie (7) est déchargé, un échange de données (17) destiné à contrôler l'autorisation d'accès puisse avoir lieu entre la télécommande (6) et le système de fermeture pour véhicule automobile (2) au moyen du transpondeur (14).

2. Système de fermeture pour véhicule automobile selon la revendication 1, **caractérisé en ce que** le signal (10) de déverrouillage et/ou de verrouillage de la serrure pour véhicule automobile (3) pouvant être délivré par l'émetteur (8) de la télécommande (6) est un signal radioélectrique, notamment un signal HF ou un signal infrarouge.

3. Système de fermeture pour véhicule automobile selon la revendication 1 ou 2, **caractérisé en ce que** le transpondeur (14) peut exclusivement être alimenté en énergie par le champ proche (13) et/ou contient les données d'autorisation d'accès.

4. Système de fermeture pour véhicule automobile selon l'une des revendications précédentes, **caractérisé en ce que** le champ proche (13) est un champ BF.

5. Système de fermeture pour véhicule automobile selon l'une des revendications précédentes, **caractérisé en ce que** l'échange de données (17) peut être réalisé sans fil, de préférence dans la plage BF.

6. Système de fermeture pour véhicule automobile selon l'une des revendications précédentes, **caractérisé en ce que** la télécommande (6) présente une antenne BF (16) pour l'émission et/ou la réception.

7. Système de fermeture pour véhicule automobile selon l'une des revendications précédentes, **caractérisé en ce que** le système de fermeture pour véhicule automobile (2) présente un capot (5) ou une portière de véhicule automobile (4), notamment muni d'une poignée extérieure (18) associée à laquelle est associée la serrure pour véhicule automobile (3), de préférence que l'émetteur de champ proche (15) est associé à la poignée extérieure (18), notamment disposé sur ou dans celle-ci ou à côté de celle-ci.

8. Système de fermeture pour véhicule automobile selon la revendication 7, **caractérisé en ce qu'**à la poignée extérieure (18) ou à la serrure pour véhicule automobile (3) est associé un dispositif (21) tel qu'un microrupteur (22), un palpeur ou un capteur pour détecter une approche, un contact et/ou un actionnement par la télécommande (6), de préférence que le dispositif (21) présente un creux (24) pour recevoir au moins partiellement la télécommande (6) et/ou encore de préférence que le dispositif (21) présente un fouillot (26) pouvant être tourné par la télécommande (6) et de préférence au moins un microrupteur (22) associé.

9. Système de fermeture pour véhicule automobile selon la revendication 8, **caractérisé en ce que** lors de la détection d'une approche, d'un contact et/ou d'un actionnement, l'émetteur de champ proche (15) peut être activé de préférence pendant une durée pouvant être prédéfinie et/ou jusqu'à la fin de l'échange de données (17), la serrure pour véhicule automobile (3) ne pouvant notamment être déverrouillée ou verrouillée que si l'autorisation d'accès est ou a été constatée par le biais de l'échange de données (17) avec le transpondeur (14).

10. Système de fermeture pour véhicule automobile selon l'une des revendications précédentes, **caractérisé en ce qu'**à une poignée extérieure (18) ou à la serrure pour véhicule automobile (3) est associé un élément de commande (28) actionnable depuis l'extérieur, par exemple une manette (19), un palpeur ou un capteur, pour déverrouiller et/ou verrouiller la serrure pour véhicule automobile (3), de préférence que lors de l'actionnement de l'élément de commande (28), l'émetteur de champ proche (15) peut être activé de préférence pendant une durée prédéfinie et/ou jusqu'à la fin de l'échange de données (17), et/ou encore de préférence que la serrure pour véhicule automobile (3) ne peut être déverrouillée ou verrouillée lors de l'actionnement de l'élément de commande (28) que si l'autorisation d'accès est ou a été constatée par le biais de l'échange de données (17) avec le transpondeur (14) .

11. Télécommande (6) pour un système de fermeture pour véhicule automobile (2) notamment configuré selon l'une des revendications 1 à 10, la télécommande (6) présentant un accumulateur d'énergie (7), un émetteur (8) pouvant être alimenté par l'accumulateur d'énergie (7) et un élément d'actionnement (9) de sorte qu'un signal (10) de déverrouillage et/ou de verrouillage de la serrure pour véhicule automobile (3) du système de fermeture pour véhicule automobile (2) puisse être émis lors de l'actionnement de l'élément d'actionnement (9), **caractérisée en ce que** la télécommande (6) présente en plus un transpondeur (14) pouvant être alimenté en énergie par un champ proche (13) de sorte que lorsque l'accumulateur d'énergie (7) est déchargé, un échange de données (17) destiné à contrôler l'autorisation d'accès puisse avoir lieu dans le champ proche (13) au moyen du transpondeur (14), de préférence que la télécommande (6) présente les caractéristiques d'une ou plusieurs des revendications 2 à 6.

12. Véhicule automobile (1) équipé d'un système de fermeture pour véhicule automobile (2), **caractérisé en ce que** le système de fermeture pour véhicule automobile (2) est configuré selon l'une des revendications 1 à 10.

13. Véhicule automobile selon la revendication 12, **caractérisé en ce que** le véhicule automobile (1) présente un dispositif antivol qui peut être désactivé au moyen de la télécommande (6) ou de son transpondeur (14) et/ou de préférence que le véhicule automobile (1) est configuré de telle sorte que le démarrage du véhicule automobile (1) peut être libéré au moyen de la télécommande (6) ou de son transpondeur (14).

14. Véhicule automobile selon la revendication 12 ou 13, **caractérisé en ce que** le véhicule automobile (1) présente un dispositif pour charger l'accumulateur d'énergie (8) de la télécommande (6).
